# EUROPEAN PATENT SPECIFICATION

(11) **EP 2 346 373 B1**
(45) Date of publication and mention of the grant of the patent: **31.10.2012**
(21) Application number: 08876103.6
(22) Date of filing: 18.11.2008
(51) Int. Cl.: A47C 5/12

(54) **STRUCTURE FOR RESTING FURNITURE**
STRUKTUR FÜR RUHEMÖBEL
STRUCTURE POUR MEUBLE DE REPOS

(43) Date of publication of application: 27.07.2011
(73) Proprietor: Salvadori, Luciano, 56034 Casciana Terme (IT); Salvadori, Simone, 56034 Casciana Terme (IT); Salvadori, Fabio, 56034 Casciana Terme (IT); Salvadori, Federico, 56034 Casciana Terme (PI) (IT)
(72) Inventor: SALVADORI, Fabio, 26034 Casciana Terme (PI) (IT)
(74) Representative: Turini, Laura
(86) International application number: PCT/IT2008/000717
(87) International publication number: WO 2010/058431

(56) References cited:
- EP-A- 0 152 392
- CH-A5- 696 958
- DE-U1- 20 200 930

## Description

### Technical Field

The present invention refers to the technical field of furniture in general. In particular it refers to a new method of processing for the realization of structures destined to the creation of resting furniture for people, particularly couches, beds, mattresses, chairs and similar.

It is also described the structure realized with such method.

### State of the Art

since a long time are known the technical processing for the realization of couches, beds and furniture in general destined specifically for the people's resting. As an example it is described a realization technique of a couch (but the problem remains unchanged in the case of other kinds of components), which passes through different processing phases that are extremely complex and expensive.

First, according to a first processing phase, it must be realized a supporting framework destined to give the right rigidity and supporting capacity of the weight of the same couch. It is indeed required that the couch is capable to sustain the weight of the people that are seated or lying down on it. Only after, around the structure so realized, it will be constructed an opportune padding. When this operation is done, the couch is then upholstered with the selected lining, as for example leather or common synthetic textures or cotton.

According to the prior art, the realization of the framework can be done according to different techniques. For example it is common a realization in metal that is made by combining to each other tubes and springs. In other cases it can be indifferently used a combination of panels and wood laths (plywood, etc.). It is then possible also a combination of metal and wood together or similar materials. On the other hand in the case of mattresses realization, for example, it is necessary to assemble the springs to create the structure around which realize the padding. In particular, it is realized an opportune supporting surface constituted by the spring in metal, wood or in combination of these materials.

It is clear how this traditional realization method is not free from great inconvenient described as follow.

The realization of a framework (independently if for a couch or any other relaxing component) is practically an operation that does not apply to a complete automatization and requires always the presence of a human's hand making the work almost always of handicraft kind, also for productions that are part of selected sets. The tubes (or laths and panels in a totally indifferent manner), after they have been custom cut, must be indeed apposed and fixed to each other according to predetermined geometries that must contribute to create the final shape. It is clear how such composition process is hardly feasible exclusively by the machines (both from the technological and expenses view), especially if the design is variable into a wide series of possible geometries. The approaching indeed imply a remarkable number of welding of the parts until the definite shape is obtained. It is clear how also this operation requires a practically handicraft job with a continuous human and manual presence. Indeed, also in the case where more or less automated welding machines are used, it is anyway necessary the human presence to appose the parts creating the final geometries and to control anyway the welding quality between the parts. What has been said is also directly connected to the limited "numbers" of the pieces to realize.

It is at this point clear how in this technical field is extremely expensive the realization of the products. Indeed it is clear how they badly apply to an industrialization which cannot be held over a certain point without having consequences of worsened elevated costs. Indeed not being possible a mass production totally automated, the production costs remarkably rise against a quantity of pieces realized that is very reduced.

Another problem, not less important than the one described, refers to the non rare case where the buyer request also variations on the standard production. In this case, all the more so, the production costs increase furthermore as it is necessary to cut the pieces into dimensions that are different from the standard ones to then proceed with the welding of the same according to geometries that can be different from the ones that are commonly used.

The handicraft features of the production remarkably bear on the so called "Lead Time" or rather the time it takes to delivery the product. Comprise indeed product's storages even partially pre-assembled to gain time on the production described above has a cost that is too high. For this reason the production of each piece starts always from the beginning. This implies a quantity of production greatly lower and longer waiting times for the client. The whole, obviously, often turns out to be in missing gains or delays in the payments.

Not last, another problem (anyway common in general to all the fields of production in the field) is relative to the transportation. Often the firm that produces the frameworks of the couches, or of other furniture, is an external firm respect to the one that produces the final padding process. In this case is anyway necessary to organize the transportations towards the final production place. It is clear how the frameworks, tracing the final shape of the couch, result to be cumbersome. This implies high costs for the transportation, especially if compared to the value of the transported structures, given that each truck is capable to contain a relatively limited number of pieces. It is clear how also the transportation bears in an important manner on the production costs with a consequent rise of the selling costs. The use of shape memory plastic in the furniture industry is known for example from DE 202 00 9304.

### Disclosure of invention

It is therefore the aim of the present invention to give a new furniture realization method for the resting of people, particularly couches, beds, mattresses, chairs and similar that resolves all the above inconvenient.

Thus it is the aim of the present invention to give a new method of realization of a base supporting structure for the realization of couches, beds, mattresses, chairs and similar that applies to a complete automation, greatly increasing the production.

In particular it is the aim of the present invention to eliminate entirely the assemblage phases of many parts structural to each other (for example by welding) for the realization of a final structure, economizing this way on the production time.

These and other aims are obtained with the present method as claimed in claim 1.

According to this method, the use of a generic starting solid body (of predetermined initial shape and volume), allows a process at the machines tools similar to the mechanical standard type process but applied in an innovative manner in a completely new technical field. Thus it is possible to automate the realization of a structure base shape without running into long assemblage and laths or tubes welding operations of handicraft type. This is applicable in the same manner for the realization for example of a base structure for couches as also mattresses, chairs or resting furniture in general.

Advantageously the prearrangement operation can comprise two possible choices. The first possible choice refers to the prearrangement of a sole piece (1), said prearrangement allowing to define, starting from the piece, a final shape for the achievement of the base structure. In such manner it is clear how a sole processing cycle realizes the final structure entirely eliminating the assemblage, for example by welding, inconvenient of the prior art.

However a second possibility can comprise a prearrangement of more pieces (1), said prearrangement allowing a processing of parts that will be assembled afterwards for the achievement of the base structure. In this manner it is possible to easily automate entirely the production of more parts, eventually to place in the storage, to then assemble them afterward for example by gluing.

In all cases, anyway, the processing operation at the machines tools comprise at least the further following operations:
- Positioning of the body on the machines tools;
- Activation of the machines according to predetermined processing programs, said processing programs defining processing cycles able to realize selected shapes.

In this manner the operator can use the machines according to specific processing cycles to work the body (represented by a sole starting piece placed on the machines) according to desired shapes. It is thus clear how this specific processing at the machines tools is extremely faster than a long operation of parts' assemblage and following welding. Thus it is clear how, according to this method, it is possible to remarkably increase the production reducing the so called "Lead Time".

The usable machines tools can then be of different kind. For example the activation operation comprises a programming of machineries according to one of the following choices:
- Programming of numerical control machines for shaving removal;
- Programming of electro-mechanics machines in general.

In the case of numerical control machines for shaving removal, these realize indeed a removal of shaving by means of a milling operation with an appropriate milling cutter (6). In such case having the body on said machines, these can be adequately programmed to obtain the desired processing cycles.

Alternatively, if are used electro-mechanic machines types, these realize cuts to generate the surfaces of the structure according to different methods. A typical electro-mechanic machine can for example realize simple mechanical cuts. Alternatively the same type of machine can realize specific radiation cuts or even use high pressure liquid/gas mixtures.

The deformation operation of the structure comprises a new compaction of the dimensions with appropriate press or similar.

In particular the volume reduction can comprise one of the following choices:
- Reduction of half of the original volume;
- Reduction of a quarter of the original volume;
- Reduction lower than a quarter of the original volume;

Advantageously, previous to the compaction operation (therefore at the end of the process at the machines), can be comprised a further superficial treatment operation to give particular superficial mechanical features. This could consist in a spraying operation of a treatment material. Particularly suitable is the polymer, for example a polyurethane comprising predetermined percentage of Polyol and Isocyanate.

Alternatively and according to the demands, it is possible also to comprise a combination of spraying and accretion, or rather are sprayed polymeric materials that are able to spread during time to interact with the structure and confer to it other specific superficial features. At last it can also be possible an injection operation of a polymer.

In addition, the above superficial treatment operations can also comprise, in combination or also separately, a thermal and/or chemical conditioning, still for a superficial treatment.

At the end of the superficial treatment phase it can be comprised another finishing process phase at the machines tools, superficial modelling or shaping required to give to the structure the final shape.

The treatment operations result thus particularly convenient for the function that the structure will have to perform, even if it can always be addressed to specific padding realizable in a second time.

Finally, after the compaction and cooling operation, is then expected an ulterior heating of the cube above the Tg temperature to rebuild the original shape of the structure. This operation can be made in any time and particularly after the transportation or delivery to the client.

### Brief description of drawings

Further features and advantages of this method of processing of a structure for couches, beds, mattresses, chairs and similar, according to the invention, will be clearer with the description that of one of its pattern realization that follows, made to illustrate but not limit, with reference to the annexed drawings, in which:
- Figure 1 represents a solid body of composite material in general and its predisposition on the machine tool;
- Figure 2 represents schematically a processing phase at the machines tools according to a predetermined processing cycle;
- Figure 3 represents heating and cooling cycles to deform polymers with shape memory;
- Figure 4 represents schematically a possible treatment cycle of the structure's surface following to the processing at the machines tools.
- Figure 5 represents a following finishing processing phase at the machines tools.

### Brief description of Drawings

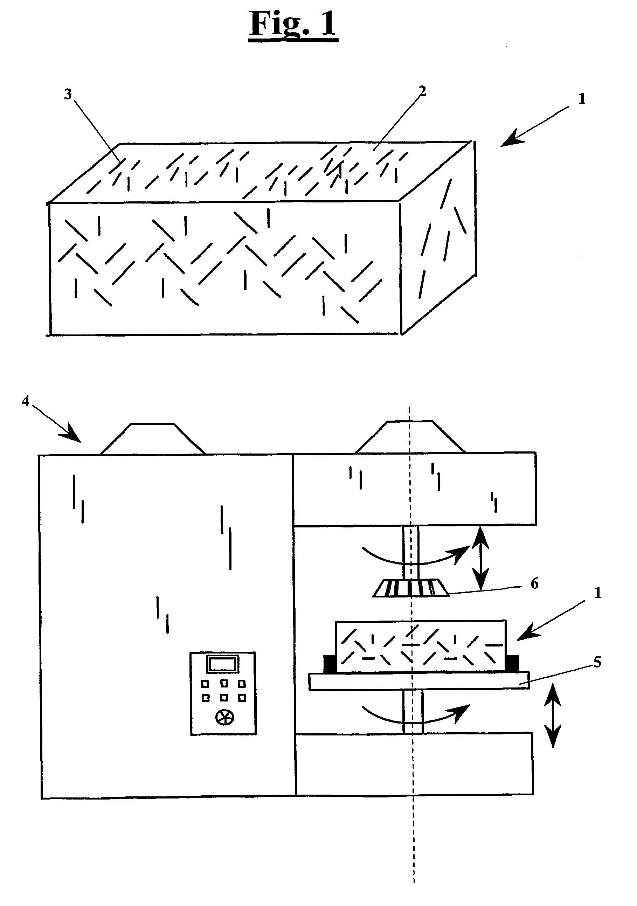

With reference to figure 1, it is described the present innovative method for the realization of base structures constituting the framework of couches, mattresses, beds, couches in general and similar. Only for simplicity and in a non limitative manner, the reference drawings describe the realization of a base structure for couches. The present description, as said, can thus be applied to other structures of furniture in general (for example mattresses) without having to move apart from the present inventive concept.

As described in figure 1, the different expected processing phases or operations comprise first of all a predisposition of a generic body 1, or rather the preparation of a solid body of any shape. The body can be a sole piece, in the sense that is predisposed in a sole solid body ready to undergo the entire processing cycle that will allow the final achievement of the structure. Alternatively more bodies in series can be processes to define parts of the structure and then be assembled to each other, for example by gluing.

Obviously any other kind of material can be easily used, without having to move apart from the present inventive concept. However, of particular interest for the present invention, result to be the composite material.

As well known in the state of the art, a composite material is a material obtained through the consolidation also mechanical of at least two elements with chemical-physic features such to make them different, insoluble and separated from each other. Such materials are usually and without any limitation defined as reinforcement (or also fibre) and matrix. The consolidation of such elements must, anyway, give rise to a continuous solid material that is able to transmit and distribute the internal stress, given by the external stresses. Obviously the types of matrixes within which are then dipped the reinforcement are of different type. For example the most common matrixes can be of organic or non organic polymeric type, or of ceramic or even metallic kind. Similarly the reinforcements can be realized in carbon, glass, boron on in an endless kind of different materials.

In figure 1 is thus represented the generic body 1 in composite material of any kind and comprising thus a matrix 2 and fibres 3 entirely generic. The initial shapes of the body 1 to process can be of any kind, without having to move from the present inventive concept. In figure 1 it has been chosen, in a non limitative manner, an initial shape of the raw material body 1 coinciding to a parallelepiped.

Still as described in figure 1, the parallelepiped of composite material is placed on selected machines tools 4. The machines tools able to realize a specific processing cycle of the initial raw material 1 can be of different kind. Without any limitation and only as an example, the undertaken figure describes a milling machine able to opportunely shape the initial parallelepiped. Obviously, without any limitation, it would be possible to use any other kind of machinery as electro-mechanical machines (as for example CNC or laser cutting or similar machines). In particular such machines can realize mechanical cuts also through specific radiations (laser, etc.) or also high pressure liquid/gas fluids.

Moreover, for the aims of the present invention, the numerical control , or control unit machines, result to be particularly suitable being versatile and allowing this way to set rapidly different processing programs automating the cycle in function of the product to process. Indeed the numerical control or control unit machines, make simple and rapid any change in dimension or shape of the same product, by simply setting new working coordinates. The use of a specific machine in the description that follows is thus to be intended as a clarifying example and not limitative.

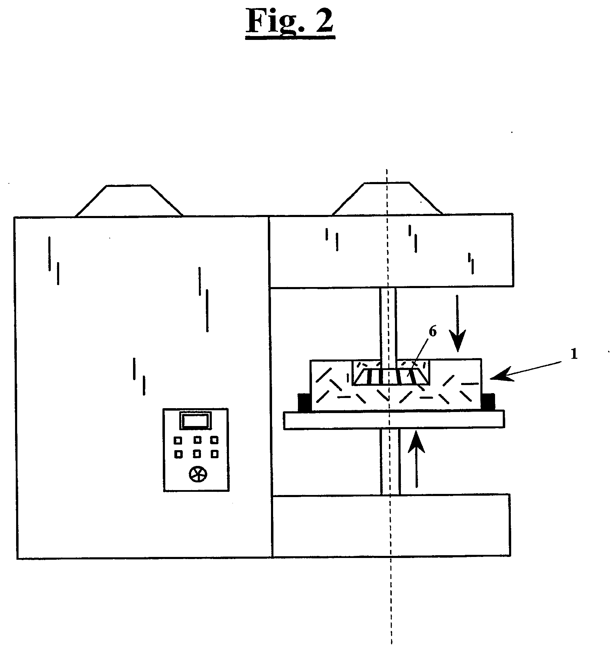

Still as represented in figure 1 and figure 2, the initial raw material body 1 is thus positioned on the working table 5 of the machine 4. In this case, according to a possible processing cycle, the milling cutter 6 ( which has features that are adequate to the processing of the material in terms of the material of which is made, the geometry, the cooling off of the tool, etc.) enters the material realizing the specific geometries. Just as an example, the milling cutter represented in the figure realizes the seat and the headboard of the couch penetrating in the body. By setting, thus, different processing programs (also on types of machines placed in production series) can be realized working cycles that are entirely automated realizing not only base structures for couches, but a wide range of products comprising mattresses/boxes, beds, armchairs, chairs and similar. As said, alternatively, the processing cycle can involve more processed bodies according to parts that define the structure and destined to be assembled to each other in a second time.

By applying the present described technique, we have the freedom to change the type of material selected according to the specified constructive needs. In such case, a material that is particularly suitable for the present application result to be a polymeric material, and in particular polymeric materials with shape memory. It is well known how these last one have such a capacity to maintain a modified shape after a forced deformation taken place above their specific glass transition temperature and following "bound" cooling. A further heating above this temperature in the absence of bonds rebuilds their initial shape.

By getting into detail, a polymer with shape memory, can be heated above its specific transition memory Tg and deformed as required. Further to its cooling, by maintaining it forcedly deformed (for example by means of presses or similar), will maintain permanently its new deformed shape. A further heating above its transition temperature, without any blocking bond, will rebuild its original shape.

It is then known how each polymer material, on the base of the specific chemical composition has its own mechanical features and its own temperature. In particular, the present invention preferably points to polymer material with memory shape that have a transition temperature at least equal or greater than 50°C and anyway greater than the specific temperature of use of the product.

Thus it is possible to use this property of the polymers materials with shape memory to realize a particular expansion of the productive cycle for the realization of supporting structures as described above.

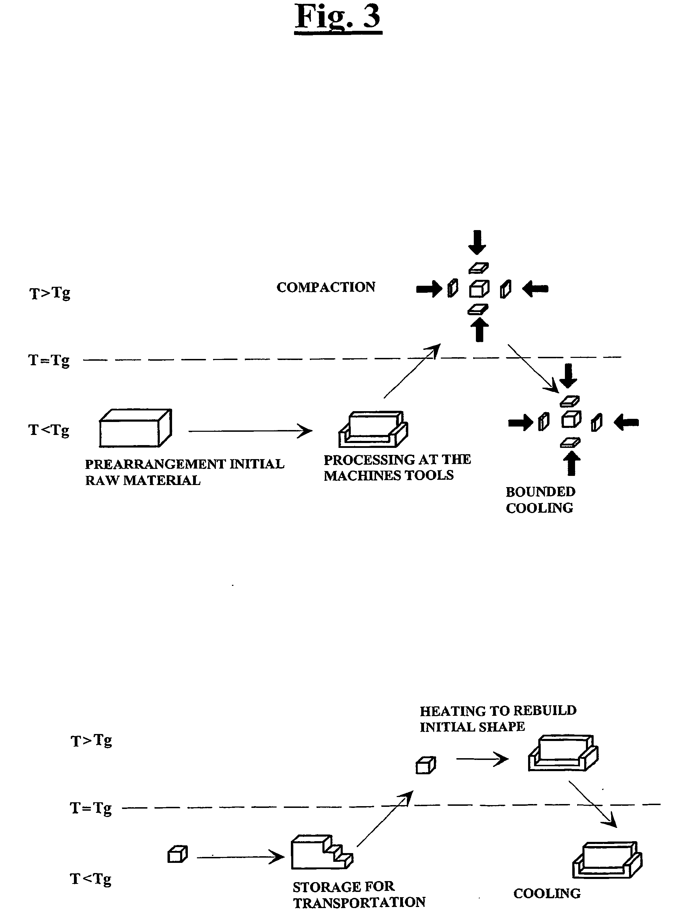

The figure 3 simplifies the present productive cycle highlighting a hypothetical reference transition temperature (**Tg** short dashes line). Having thus a raw material suitable polymeric material, we proceed to a first phase comprising a normal processing cycle at the machines tools as described above. Afterwards it is associated also a heating phase above the **Tg** temperature with deformation according to a predetermined shape. Figure 3 shows, as an example, a compaction according to a cubic shape through press or similar. Obviously any other kind of deformation can be made, without having to move apart from the present inventive concept. At this point it follows the cooling step maintaining the body bound in its deformed configuration still through press. Once it is reached a temperature lower than the transition temperature, the body will maintain unchanged its new shape (cubic). It is at this point possible to realize a storing in the storage or for the transportation that has the minumum encumbrances.

When the object reached the destination, or at any time it is necessary, it is possible to proceed with a heating above the **Tg** temperature that will allow to the material to rebeuild its original shape (shape memory) making it ready for all the further processings and/or operations.

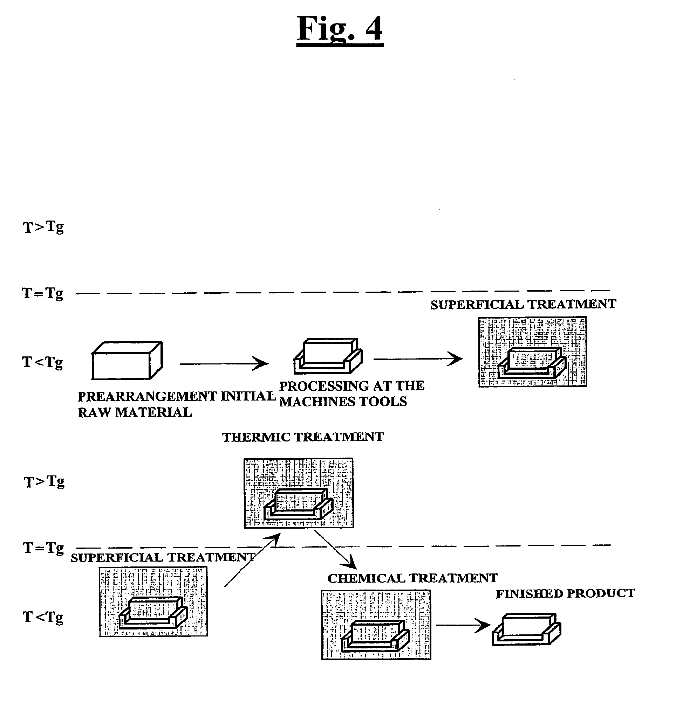

As described in figure 4, it is possible to comprise a further treatment phase of the structure's surface, for example following to the processing at the machines tools. This can comprise a spraying or a spraying and growth operation of a polymer, particularly a polyurethane. In particular the polyirethane is a material composed by the mixture of two components, the "Polyol" and the "Isocyanate" in preselected percentages.

In the case it is used the spraying and growth tecnique, then the used material will have also expansion features in the course of time. The expansion gives particular features to the structure on which it is sprayed. Alternatively it is also possible an injection in one or more phases, in a way to superficially coat the same structure or parts of it with a layer that has different mechanical features compared to the ones of the base structure. The above superficial treatment operations can happen in combination or not with an eventual thermal and/or chemical conditioning operation of the superficial layer of the structure's material. The undertaken figure shows indeed the case of superficial treatment followed by a thermal and then chemical treatment. Without any limitation it is possible to choose a superficial treatment eliminating entirely the thermal and/or chemical one or viceversa.

In any case the structure, precedently processed, acquires particular mechanical features in correspondence to its superficial layer (for example a particular softness). Obviously, the processing at the machines tools having to remove a remarkable quantity of material, it is necessary to make such operation after the initial processing.

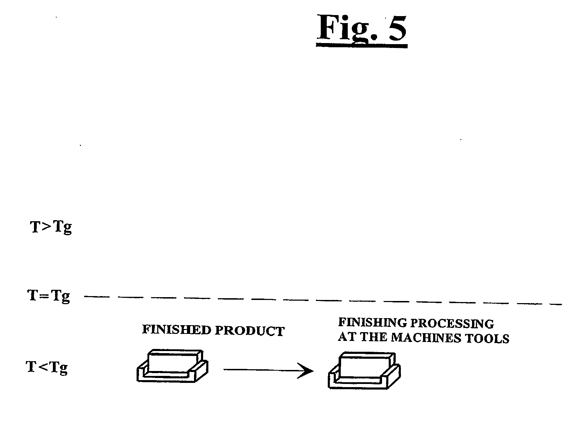

At the end of the superficial treatment phase (look at figure 5) of the structure it can follow another finishing process phase at the machines tools, or rather superficial modelling or shaping, required to give to the structure the final shape and eliminate harshness derived by the thermal treatments. Without moving too far, obviously, the finishing processing can also not be made if not required.

Figure 5, as an example, shows the processing operation at the machines tools right after the initial process of the base structure, but nothing would avoid to realize it in any other moment following the same processing (for example after the transportation).

It is at this point clear how the aims of the present inventing have been reached. In particular it is clear how the use of materials with opportune initial shape, especially the composites, allow to make processing cycles at the machines tools that automate the production. Also a particular request by a client, that is different from the standard shape of a product realization, can be obtained in a totally automated and reproducible in series manner.

Moreover, the use of polymers with shape memory implies a great economical advantage through the saving in the encumbrances for the transportation and the installation. Indeed it is possible, by opportunately compacting the product, to store and transport a number vastly greater of pieces, the whole with great economical advantages.

The above description of a specific shape is able to show the invention from the conceptive point of view, in a way that others, by using the art, can modify and/or adapt in different applications this specific shape without any further research and without going apart from the inventive concept, and, therefore, it is intended that these adaptations and transformations will be considered as equivalent to this specific realization. The means and materials to make the many described functions can be of various nature without exiting the area of the invention it is intended that the expressions or the terminology used have a simple descriptive aim and therefore not limiting.

## Claims

1. Method for the realization of a base structure for couches, beds, mattresses, chairs and similar comprising the following operations:
- Prearrangement of at least a solid body (**1**) of predetermined initial shape;
- Processing of said solid body (**1**) according to predetermined geometries using the machine tools (4);
wherein said prearranged solid body (**1**) is made of polymeric material with shape memory, said material having a transition temperature (Tg) being able to assume a second shape after heating it to a temperature greater than the transition temperature (Tg) followed by a cooling under said temperature (Tg) and maintaining it in the deformed configuration by means of an external force, said polymeric material having memory of its initial shape and rebuilding said shape after a further heating above the transition temperature (Tg) in the absence of said external force;
wherein, after said processing operation by the machine tools (**4**), the following operations are carried out:
- Heating of the base structure above the transition temperature (Tg):
- Deformation according to a predetermined shape;
- Following cooling under the glass transition temperature (Tg) maintaining said configuration deformed by means of appropriate compression means, said cooling stabilizes the deformed shape;
and **characterized by** the fact that said deformation operation of the base structure comprises a compaction of the dimensions through apposite press which deforms said base structure into a cubical or similar shape with a reduced volume respect to the original shape.

2. Method for the realization of a base structure for couches, beds, mattresses, chairs and similar, according to claim **1**, where said prearrangement operation can comprise one of the following choices:
- Prearrangement of a sole piece (**1**), said prearrangement allowing to define, starting from said piece, a final shape for the achievement of said base structure.
- Prearrangement of more pieces (**1**), said prearrangement allowing a processing of parts that will be assembled afterwards for the achievement of the base structure.

3. Method for the realization of a base structure for couches, beds, mattresses, chairs and similar, according to claim **1**, where said processing operation at the machines tools comprises at least one of the following choices:
- Positioning of said at least one body on the machines tools;
- Activation of the machines according to predetermined processing programs, said processing programs defining processing cycles able to realize selected shapes.

4. Method for the realization of a base structure for couches, beds, mattresses, chairs and similar, according to claim **3**, where said activation operation comprise a programming of machines according to one of the following choices:
- Programming of numerical control machines;
- Programming of electro-mechanics machines.

5. Method for the realization of a base structure for couches, beds, mattresses, chairs and similar, according to claim **3** and **4,** where said numerical control machines realize a removal of shaving and said processing cycle comprising at least a milling operation by means of a specific milling cutter (6) or similar.

6. Method for the realization of a base structure for couches, beds, mattresses, chairs and similar, according to claim **3** and **4,** where said electro-mechanic machines realize cuts to generate the surfaces of the structure according to one or more of the following methods:
- Mechanicals cut method;
- Specific radiations cut method;
- Cut method through high pressure liquid/gas mixture

7. Method for the realization of a base structure for couches, beds, mattresses, chairs and similar, according to claim 1, where said glass transition temperature (Tg) is a temperature equal or greater than 50° C.

8. Method for the realization of a base structure for couches, beds, mattresses, chairs and similar, according to claim 1, where said volume reduction comprises pne of the following choices:
- Reduction of half of the original volume;
- Reduction of a quarter of the original volume;
- Reduction lower than a quarter of the original volume;

9. Method for the realization of a base structure for couches, beds, mattresses, chairs and similar, according to claim 1 or 8, where previously to said deformation operation it is expected a further operation of superficial treatment, said operation comprising one of the following choices:
- Superficial spraying;
- Spraying and growth;
- Injection in correspondence to the surface of said structure.

10. Method for the realization of a base structure for couches, beds, mattresses, chairs and similar, according to claim 9, where said operations of superficial treatment comprise the use of polymer.

11. Method for the realization of a base structure for couches, beds, mattresses, chairs and similar, according to claim 10, where said polymer is a polyurethane composed by predetermined percentages of Polyol and Isocyanate.

12. Method for the realization of a base structure for couches, beds, mattresses, chairs and similar, according to one or more of the claims previous to the ones from 9 to 11, where it is expected a further thermic and/or chemical treatment of the superficial layer of the material of the structure, said treatment happening:
- In combination to said operation of superficial treatment of the material of the structure;
- After of before to said operation of superficial treatment of the material of the surface.

13. Method for the realization of a base structure for couches, beds, mattresses, chairs and similar, according to one or more of the previous claims, where at the end of said superficial treatment it is expected a further phase of finishing processing at the machines.

14. Method for the realization of a base structure for couches, beds, mattresses, chairs and similar, according to one or more of the previous claims, where after said compaction and cooling operation it is expected a further heating of said cube above said glass transition temperature (Tg) to rebuild the original shape of the structure.

15. Base structure for couches, beds, mattresses, chairs and similar, **characterized by** the fact that it comprises a sole piece (1) or more pieces of material processed according to the method of one or more of the previous claims.

## Patentansprüche

1. Verfahren zur Realisierung einer Grundstruktur für Liegen, Betten, Matratzen, Stühle und Ähnliches, umfassend die folgenden Operationen:
- Voranordnung von mindestens einem festen Körper (**1**) mit einer vorbestimmten Anfangsform;
- Bearbeitung des festen Körpers (**1**) nach vorgegebenen Geometrien unter Verwendung der Werkzeugmaschinen (**4**);
wobei der vorbereitete feste Körper (**1**) aus einem Polymermaterial mit Formgedächtnis besteht, wobei das Material eine Übergangstemperatur (Tg) aufweist, so dass es fähig ist, eine zweite Form anzunehmen, nachdem es auf eine Temperatur über der Übergangstemperatur erhitzt wurde, gefolgt von Abkühlen unter die Temperatur (Tg) und Erhalten dessen in der verformten Konfiguration mittels einer externen Kraft, wobei das Polymermaterial über ein Gedächtnis seiner Anfangsform verfügt, und Wiederherstellen der Form nach einem weiteren Erhitzen über die Übergangstemperatur (Tg) im Fehlen der externen Kraft;
wobei nach der Bearbeitungsoperation mit den Werkzeugmaschinen (**4**) die folgenden Operationen durchgeführt werden:
- Erhitzen der Grundstruktur über die Übergangstemperatur (Tg);
- Verformung gemäß einer vorbestimmten Form;
- Nach Abkühlung unter die Glasübergangstemperatur (Tg) Beibehalten der Konfiguration, die mittels geeigneter Komprimiereinrichtungen verformt worden ist, wobei die Kühlung die verformte Form stabilisiert;
und **dadurch gekennzeichnet, dass** die Verformungsoperation der Grundstruktur eine Kompaktierung der Abmessungen durch passendes Verpressen umfasst, welches die Grundstruktur in eine Würfel- oder ähnliche Form mit einem Volumen, das geringer ist als das der Anfangsform verformt.

2. Verfahren zur Realisierung einer Grundstruktur für Liegen, Betten, Matratzen, Stühle und Ähnliches, nach Anspruch **1,** wobei die Voranordnungsoperation eine der folgenden Wahlmöglichkeiten umfassen kann:
- Voranordnung eines einzelnen Stücks (**1**), wobei die Voranordnung gestattet, ausgehend von dem Stück, eine Endform für die Verwirklichung der Basisstruktur zu definieren.
- Voranordnung von mehreren Stücken (**1**), wobei die Voranordnung eine Verarbeitung von Teilen gestattet, die später für die Verwirklichung der Basisstruktur zusammengebaut werden.

3. Verfahren zur Realisierung einer Grundstruktur für Liegen, Betten, Matratzen, Stühle und Ähnliches nach Anspruch **1**, wobei die Bearbeitungsoperation an den Werkzeugmaschinen mindestens eine der folgenden Wahlmöglichkeiten umfasst:
- Positionieren des mindestens einen Körpers auf den Werkzeugmaschinen;
- Aktivierung der Maschinen nach einem vorbestimmten Bearbeitungsprogramm, wobei das Bearbeitungsprogramm Bearbeitungszyklen definiert, die in der Lage sind, ausgewählte Formen zu realisieren.

4. Verfahren zur Realisierung einer Grundstruktur für Liegen, Betten, Matratzen, Stühle und Ähnliches nach Anspruch **3**, wobei die Aktivierungsoperation ein Programmieren von Maschinen nach einer der folgenden Wahlmöglichkeiten umfasst:
- Programmieren von numerisch gesteuerten Maschinen;
- Programmieren von elektromechanischen Maschinen.

5. Verfahren zur Realisierung einer Grundstruktur für Liegen, Betten, Matratzen, Stühle und Ähnliches nach Anspruch **3** und **4,** wobei die numerisch gesteuerten Maschinen eine Entfernung von Span realisieren und der Bearbeitungszyklus mindestens eine Fräsoperation mittels eines bestimmten Fräsers (**6**) oder ähnlichem umfasst.

6. Verfahren zur Realisierung einer Grundstruktur für Liegen, Betten, Matratzen, Stühle und Ähnliches nach Anspruch **3** und **4,** wobei die elektromechanischen Maschinen Schnitte realisieren, um die Oberflächen der Struktur nach einem oder mehreren der folgenden Verfahren zu erzeugen:
- mechanische Schneideverfahren;
- Schneideverfahren mit bestimmten Strahlungen;
- Schneideverfahren mittels eines Hochdruckflüssigkeits-/Gas-Gemisches

7. Verfahren zur Realisierung einer Grundstruktur für Liegen, Betten, Matratzen, Stühle und Ähnliches nach Anspruch 1, wobei die Glasübergangstemperatur (Tg) eine Temperatur von 50 °C oder höher ist.

8. Verfahren zur Realisierung einer Grundstruktur für Liegen, Betten, Matratzen, Stühle und Ähnliches nach Anspruch 1, wobei die Volumenreduzierung eine der folgenden Wahlmöglichkeiten umfasst
- Reduzierung der Hälfte des ursprünglichen Volumens;
- Reduzierung eines Viertels des ursprünglichen Volumens;
- Reduzierung weniger als ein Viertel des ursprünglichen Volumens.

9. Verfahren zur Realisierung einer Grundstruktur für Sofas, Betten, Matratzen, Stühle und Ähnliches nach einem der Ansprüche 1 oder 8, wo vor der Verformungsoperation eine weitere Operation einer Oberflächenbehandlung erwartet wird, wobei die Operation eine der folgenden Wahlmöglichkeiten umfasst:
- oberflächliches Besprühen;
- Besprühen und Wachsen;
- Einspritzung entsprechend der Oberfläche der Struktur.

10. Verfahren zur Realisierung einer Grundstruktur für Liegen, Betten, Matratzen, Stühle und Ähnliches nach Anspruch 9, wobei die Operationen der Oberflächenbehandlung die Verwendung des Polymers umfassen.

11. Verfahren zur Realisierung einer Grundstruktur für Liegen, Betten, Matratzen, Stühle und Ähnliches nach Anspruch 10, wobei das Polymer ein Polyurethan ist, das aus vorgegebenen prozentualen Anteilen an Polyol und Isocyanat besteht.

12. Verfahren zur Realisierung einer Grundstruktur für Liegen, Betten, Matratzen, Stühle und Ähnliches nach einem oder mehreren der Ansprüche vor den Ansprüchen 9 bis 11, wobei eine weitere thermische und/oder chemische Behandlung der Oberflächenschicht des Materials der Struktur erwartet wird, wobei die Behandlung folgendermaßen erfolgt:
- In Kombination mit der Operation der Oberflächenbehandlung des Materials der Struktur;
- Nach oder vor der Operation der Oberflächenbehandlung des Materials der Oberfläche.

13. Verfahren zur Realisierung einer Grundstruktur für Liegen, Betten, Matratzen, Stühle und Ähnliches nach einem oder mehreren der vorhergehenden Ansprüche, wobei am Ende der Oberflächenbehandlung eine weitere Phase der Endbearbeitung an den Maschinen erwartet wird.

14. Verfahren zur Realisierung einer Grundstruktur für Liegen, Betten, Matratzen, Stühle und Ähnliches nach einem oder mehreren der vorhergehenden Ansprüche, wobei nach der Kompaktierungs- und Kühloperation ein weiteres Erhitzen des Würfels über die Übergangstemperatur (Tg) erwartet wird, um die ursprüngliche Form der Struktur wiederherzustellen.

15. Grundstruktur für Liegen, Betten, Matratzen, Stühle und Ähnliches, **dadurch gekennzeichnet, dass** diese ein einzelnes Stück (**1**) oder mehrere Stücke des Materials umfasst, das nach einem oder mehreren der vorherigen Ansprüche verarbeitet wird.

## Revendications

1. Une méthode pour la réalisation d'une structure de base pour les canapés-lits, lits, matelas, chaises ou autres article similaire, comprenant les opérations suivantes :
- La prédisposition, au moins, d'un corps solide (**1**) ayant une forme initiale préfixée ;
- Le travail dudit corps solide (**1**) conformément aux géométries préfixées à l'aide de machines-outils (**4**) ;
où ledit corps solide (**1**) ainsi prédisposé est composé d'un matériau polymérique avec mémoire de forme ; ayant une température de transition (Tg), ledit matériau est en mesure de prendre une seconde forme après avoir été chauffé à une température supérieure à la température de transition (Tg) puis refroidi à une température inférieure à ladite température (Tg), tout en le maintenant dans cet état déformé par l'intermédiaire d'une force extérieure. Ledit matériau polymérique en question ayant conservé en mémoire sa forme initiale reprendra cette forme après avoir été nouvellement réchauffé au-dessus de la température de transition (Tg) et sans la présence de la force extérieure susmentionnée ;
où, après ce travail effectué par les machines-outils (**4**), les opérations suivantes sont réalisées :
- Chauffage de la structure de base au-dessus de la température de transition(Tg) ;
- Déformation suivant à une forme préfixée ;
- Après avoir été refroidi sous la température de transition vitreuse (Tg), tout en maintenant ladite configuration déformée à l'aide de moyens de compression appropriés, ledit refroidissement stabilise la forme déformée ;
et **caractérisée par le fait que** ladite opération de déformation de la structure de base comprend un compactage des dimensions par une presse appropriée, qui déforme ladite structure de base, dans une forme cubique ou similaire d'un volume inférieur par rapport à sa forme d'origine.

2. Une méthode pour la réalisation d'une structure de base pour les canapés-lits, lits, matelas, chaises ou autres article similaire, conformément à la revendication **1**, où ladite opération de prédisposition peut comprendre, au minimum, l'une des possibilités suivantes :
- Prédisposition d'une seule pièce (**1**), ladite prédisposition permettant de définir, en partant de ladite pièce, une forme finale pour la réalisation de ladite structure de base.
- Prédisposition de plusieurs pièces (**1**), ladite prédisposition permettant le travail des pièces qui seront assemblées après la réalisation de la structure de base.

3. Une méthode pour la réalisation d'une structure de base pour les canapés-lits, lits, matelas, chaises ou autres article similaire, conformément à la revendication **1**, où ledit travail sur les machines-outils comprend, au minimum, l'une des possibilités suivantes :
- Positionnement d'un corps au moins sur les machines-outils ;
- Mise en marche des machines-outils suivant des programmes de travail préfixés, lesdits programmes définissant les cycles de travail en mesure de réaliser les formes sélectionnées.

4. Une méthode pour la réalisation d'une structure de base pour les canapés-lits, lits, matelas, chaises ou autres article similaire, conformément à la revendication **3**, où ladite opération de mise en marche comprend la programmation des machines conformément à l'une des possibilités suivantes :
- Programmation de machines à contrôle numérique ;
- Programmation de machines électromécaniques.

5. Une méthode pour la réalisation d'une structure de base pour les canapés-lits, lits, matelas, chaises ou autres article similaire, conformément aux revendications **3** et **4,** où lesdites machines à contrôle numérique procèdent à l'élimination des bavures et ledit cycle de travail comprend, au moins, une opération de meulage à l'aide d'une fraise (**6**) ou similaire.

6. Une méthode pour la réalisation d'une structure de base pour les canapés-lits, lits, matelas, chaises ou autres article similaire, conformément aux revendications **3** et **4,** où lesdites machines électromécaniques effectuent des coupures pour générer les surfaces de la structure conformément à l'une ou plusieurs des méthodes suivantes :
- Méthode de découpe mécanique ;
- Méthode de découpe par des radiations spéciales ;
- Méthode de découpe par un mélange de liquide/gaz sous haute pression

7. Une méthode pour la réalisation d'une structure de base pour les canapés-lits, lits, matelas, chaises ou autres article similaire, conformément à la revendication **1** où ladite température de transition vitreuse (Tg) est une température égale ou supérieure à 50°C.

8. Une méthode pour la réalisation d'une structure de base pour les canapés-lits, lits, matelas, chaises ou autres article similaire, conformément à la revendication **1**, où la dite réduction du volume comprend l'une des possibilités suivantes .
- Réduction de la moitié du volume d'origine ;
- Réduction d'un quart du volume d'origine ;
- Réduction de moins d'un quart du volume d'origine.

9. Une méthode pour la réalisation d'une structure de base pour les canapés-lits, lits, matelas, chaises ou autres article similaire, conformément à la revendication **1** ou **8,** où, avant ladite opération de déformation, il est prévu de procéder à une ultérieure opération de traitement de surface, ladite opération comprenant, au moins, l'une des possibilités suivantes :
- Pulvérisation sur la surface ;
- Pulvérisation et croissance ;
- Injection au niveau de la surface de ladite structure.

10. Une méthode pour la réalisation d'une structure de base pour les canapés-lits, lits, matelas, chaises ou autres article similaire, conformément à la revendication **9,** où lesdites opérations de traitement de surface comprennent l'usage de polymère.

11. Une méthode pour la réalisation d'une structure de base pour les canapés-lits, lits, matelas, chaises ou autres article similaire, conformément à la revendication **10,** où ledit polymère est un polyuréthane composé par des pourcentages de polyol et isocyanate préfixés.

12. Une méthode pour la réalisation d'une structure de base pour les canapés-lits, lits, matelas, chaises ou autres article similaire, conformément à une ou plusieurs des revendications précédant celles de 9 à 11, où il est prévu de procéder à un ultérieur traitement thermique et/ou chimique de la couche superficielle du matériau de la structure, ledit traitement se faisans :
- En association à ladite opération de traitement de surface du matériau de la structure ;
- Après ou avant ladite opération de traitement de surface du matériau de la structure.

13. Une méthode pour la réalisation d'une structure de base pour les canapés-lits, lits, matelas, chaises ou autres article similaire, conformément à une ou plusieurs des revendications précédentes, où, à la fin dudit traitement de surface, il est prévu de réaliser une autre phase de travail de finition à l'aide des machines.

14. Une méthode pour la réalisation d'une structure de base pour les canapés-lits, lits, matelas, chaises ou autres article similaire, conformément à une ou plusieurs des revendications précédentes, où, après ladite opération de compactage et de refroidissement, il est prévu de procéder à une autre réchauffage dudit cube au-dessus de la température de transition vitreuse (Tg) pour recréer la forme originale de la structure.

15. Une méthode pour la réalisation d'une structure de base pour les canapés-lits, lits, matelas, chaises ou autres article similaire, **caractérisée par** la fait qu'elle comprend une seule pièce (1) ou plusieurs pièces d'un matériau travaillé conformément à la méthode d'une ou de plusieurs des revendications précédentes.
